(19) Europäisches Patentamt
European Patent Office
Office européen des brevets

(11) **EP 3 779 363 B1**

(12) **EUROPEAN PATENT SPECIFICATION**

(45) Date of publication and mention
of the grant of the patent:
**18.05.2022 Bulletin 2022/20**

(21) Application number: **19191684.0**

(22) Date of filing: **14.08.2019**

(51) International Patent Classification (IPC):
***G01C 21/34*** *(2006.01)*     ***G01C 21/36*** *(2006.01)*

(52) Cooperative Patent Classification (CPC):
**G01C 21/3423; G01C 21/3446; G01C 21/3461;
G01C 21/3685**

(54) **METHOD AND SYSTEM FOR VEHICLE ROUTING BASED ON PARKING PROBABILITIES**

VERFAHREN UND SYSTEM ZUR FAHRZEUGFÜHRUNG BASIEREND AUF
PARKWAHRSCHEINLICHKEITEN

PROCÉDÉ ET SYSTÈME DE ROUTAGE DE VÉHICULES BASÉ SUR DES PROBABILITÉS DE
STATIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.02.2021 Bulletin 2021/07**

(73) Proprietor: **Bayerische Motoren Werke
Aktiengesellschaft
80809 München (DE)**

(72) Inventors:
• **Hedderich, Mareike
80797 München (DE)**
• **Fastenrath, Ulrich
85399 Hallbergmoos (DE)**

(56) References cited:
**US-A1- 2004 167 712     US-A1- 2014 214 319
US-A1- 2018 274 930     US-B2- 9 291 469**

## Description

### FIELD

Embodiments of the present disclosure relate to a method and system for vehicle routing.

### BACKGROUND

Stress and anxiety are well known feelings for a car driver when it comes to finding a free on-street parking spot in an urban area or estimating the time for punctual arrival at a certain destination. Cars looking for a free on-street parking spot could constitute up to 30 percent of urban traffic, as studies have shown. This results in time loss for the driver, increased air pollution and congested cities.

In view of the above, new methods and systems for vehicle routing, that overcome at least some of the problems in the art are beneficial.

US 2004/0167712 A1 relates to a method of calculating a route to a resource, the method comprising: identifying a plurality of locations at which the resource may be available; and creating an optimal route through the plurality of locations, the route assuring that the resource will be found regardless of availability at any one location.

US 2018/274930 A1 relates to a method which optimizes a parking space search for a vehicle. During the method, at least one solution option is ascertained, and an optimization solution is ascertained from the at least one solution option, wherein the probability of the availability of at least one parking space is used as an optimization parameter, the position of the at least one parking space relative to a destination is used as an additional optimization parameter, expressed as the duration until the arrival at the destination from the at least one parking space, and the drive duration from a starting location to the at least one parking space is used as an additional optimization parameter.

US 2014/214319 A1 relates to a system for recommending a driving route that reduces parking search time and parking costs. The system is configured to receive information about a current location of a car, a desired destination, and parking preferences, to process this information together with available traffic and parking information in order to calculate a recommended route a car should follow during a parking search, and to communicate the recommended route to the car driver. The driver is instructed to park at the first available spot along selected portions of the recommended route.

US 9 291 469 B2 relates to a method for planning a travel route for a vehicle including an energy storage unit. The method includes a) transmitting a destination sequence to an arithmetic logic unit coupled to a data memory storing data concerning a road network, b) calculating a route sequence for the destination sequence, c) calculating a projected amount of energy remaining in the energy storage unit for the route sequence, d) ascertaining, at least for one destination in the destination sequence, based on the projected amount of energy remaining, the road network and a projected energy consumption, points in the road network still reachable from this destination with the projected amount of energy remaining, and e) generating, for at least the one destination, a graphic map depiction in which this destination and the points in the road network still reachable from this destination are visually represented.

### SUMMARY

In light of the above, a method and a system for vehicle routing are provided. It is an object of the present disclosure to provide a more efficient routing of vehicles to reduce, for example, a time loss for a user, vehicle emissions, such as carbon dioxide emission, and a traffic volume, and in particular a congestion of cities.

Further aspects, benefits, and features of the present disclosure are apparent from the claims, the description, and the accompanying drawings.

The objects of the present invention are solved by the features of the independent claims. Preferred embodiments are defined in the dependent claims. According to an independent aspect of the present disclosure, a method for time-dependent vehicle routing as defined in claim 1 is provided.

The present disclosure provides an integrated routing approach ("universal routing algorithm") and combines a park spot routing (PSR) and a stochastic routing algorithm. The PSR uses on-street parking information, while the stochastic route utilizes historic travel time data to address punctual arrival. The universal route leads the driver through streets with high parking probabilities close to the destination while maximizing the probability of arriving on time. Thereby, a more efficient routing of vehicles can be provided to reduce, for example, a time loss for a user, vehicle emissions, such as carbon dioxide emission, and a traffic volume, and in particular a congestion of cities.

Preferably, the determining of the travel path further includes simultaneously maximizing a parking probability and the probability of arriving at the predefined time.

The determining of the travel path uses a stochastic routing algorithm.

The stochastic routing algorithm employs an integer linear program which uses e.g. a user-defined time budget.

The park spot routing is integrated in the integer linear program of the stochastic routing algorithm.

Embodiments are also directed at systems for carrying out the disclosed methods and include system aspects for performing each described method aspect. These method aspects may be performed by way of hardware components, a computer programmed by appropriate software, by any combination of the two or in any other manner. Furthermore, embodiments according to the invention are also directed at methods for operating the described system. It includes method aspects for carrying out every function of the system.

According to a further independent aspect of the present disclosure, a machine-readable medium as defined in claim 5 is provided. The machine-readable medium includes instructions executable by one or more processors to implement the method of the embodiments of the present disclosure.

The (e.g. non-transitory) machine readable medium may include, for example, optical media such as CD-ROMs and digital video disks (DVDs), and semiconductor memory devices such as Electrically Programmable Read-Only Memory (EPROM), and Electrically Erasable Programmable Read-Only Memory (EEPROM). The machine-readable medium may be used to tangibly retain computer program instructions or code organized into one or more modules and written in any desired computer programming language. When executed by, for example, one or more processors such computer program code may implement one or more of the methods described herein.

According to a further independent aspect of the present disclosure, a system for time-dependent vehicle routing as defined in claim 6 is provided. The system includes one or more processors; and a memory (e.g. the above machine-readable medium) coupled to the one or more processors and comprising instructions executable by the one or more processors to implement the method of the embodiments of the present disclosure.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1        shows an integrated route set-up for the universal route; and

FIGs. 2 to 4    show simulation results obtained by the embodiments of the present disclosure.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Uncertainty when to start a trip with the car in order to arrive on time and find a parking spot is a challenge in everyday life when it comes to private transportation. Furthermore, today's cities become more and more congested and the parking pressure increases due to the increasing number of cars in the world. Emissions in cities rise and stressed drivers, which are more likely to cause accidents, are a daily sight. Since building more roads or parking lots is not always a practical solution, urban traffic has to be optimized in order to impact the society and the ecological footprint in a positive manner.

The present disclosure presents an attempt at doing so by focusing on the needs of an urban driver. Trying to save time by taking the fastest route becomes obsolete if the route leads through congested roads due to e.g. rush hour or if the search for a free parking spot at the destination consumes a lot of time. The advantage of using the stochastic routing algorithm becomes more obvious when looking at travel time data. Current travel times include the latest congestions effects, whereas the stochastic routing is based on historic travel time data, which considers the probability of congestion effects in more detail.

In the first part, the present disclosure deals with a park spot routing algorithm (PSR) that can help to reduce the cars randomly cruising for a free parking spot by leading the driver through streets with high parking probabilities. The PSR algorithm focuses on on-street parking, with or without parking fee, while off-street parking has already been investigated. The second part presents a stochastic routing algorithm, which is based on historic travel time data and takes the uncertainties of traffic conditions into account. Traffic can fluctuate due to weather conditions, changing user demands and accidents. The stochastic routing aims at maximizing the probability of arriving before or at the deadline by using historic travel time data. The present disclosure combines a park spot and stochastic routing algorithm.

**A**. **Related Algorithms**

Shortest Path Algorithms

The most famous single-source shortest path algorithm is called Dijkstra's algorithm. It finds the shortest paths from a start vertex to every other vertex in the network. However, Dijkstra's algorithm involves storing a lot of unnecessary information if only the shortest path to one specific node is needed. It has been realized that for this scenario the amount of information stored can be limited and thus the performance increased by introducing a heuristic. The heuristic estimates the costs from the current node to the destination node. If the heuristic satisfies certain conditions, this algorithm is an exact algorithm. Only information about nodes with low costs are stored and those nodes are explored further. Costs can be travel times on road links, lengths of links etc. The difference to Dijkstra's algorithm is that nodes that are probably not on the best route are less likely to be explored. Consequently, the heuristic prevents gathering unnecessary information and speeds up the computational time. The algorithm is known as A* algorithm.

Park Spot Routing Algorithms

Cruising for parking can constitute up to 50% of urban traffic. Smart parking areas can be involved, which are connected with parking guidance and information systems. Information is provided about location and availability of parking spots, as well as about the amount of free parking spots. Since those systems lead drivers to the closest parking garage or on-street parking spot according to availability, a lot of drivers can be led to the same spot, which can cause congestion. Congestion can occur if multiple vehicles are directed on the same route or if they cross other routes and congest those. Therefore, a concept of collaborative path planning for multiple agents is suggested. Multiple vehicles on the same route are grouped into collective routes and the agents represent the vehicles. The A* algorithm is run over the routes and routes with low congestion are stored. However, if a congestion happens on a collective route, random portions of traffic are redirected and form a new collective route. They are then reintroduced back into the system and evaluated again.

In contrast to smart parking areas, on-street parking probabilities can be used. From the driver's destination, a route can be calculated through streets with high parking probabilities. The algorithm stops if the probability of finding a parking spot of greater than 95% is reached. Furthermore, it uses probabilistic graphs on on-street data on which a branch and bound and a heuristic search algorithm is carried out. In a further approach, on-street parking probabilities can be used as well, but a focus can be lied on calculating a route that minimizes the expected parking costs, consisting of the parking price and time to reach the destination. A recursive algorithm can be used that calculates a park search route of predefined length. Parking rules, traffic conditions and the driver's preferences, like time flexibility, parking duration, price elasticity and willingness to walk, have to be known.

Stochastic Routing Algorithms

There are different problem formulations considering stochasticity in routing. For the stochastic shortest path problem, the optimization criterion is to guarantee a least expected travel time (LET). The basis are stochastic, time-varying transportation networks, where arc weights (arc travel times) are random variables with probability distribution functions that vary with time. The advantage of LET is that the problem can be transformed into a deterministic routing problem and solved efficiently. However, for some applications where it is unbearable to arrive later than a certain deadline, like organ delivery or catching a flight, LET is not applicable, since there is a high variance left in the path with minimum expected travel time. Being too early could be weighted differently for some applications than being too late.

Therefore, another approach ca be used which aims at providing an optimal path with the highest probability of being faster than all other alternative paths. The stochastic shortest path problem is formulated based on probabilistic comparison. Since the probability of being faster than all other routes for each route is computed, it can be concluded that it is more desirable for the driver to use the probabilistic fastest route than the LET path. A model that optimizes both the expected travel time and reliability has been proposed. The method maximizes the probability of arriving before the deadline; however, the method requires enumerating all possible paths and is therefore not applicable to real life problems.

**B**. **The Park Spot Routing Algorithm**

In this section the first algorithm used to develop the universal routing algorithm is introduced. The park spot routing (PSR) algorithm is based on the A* algorithm described above. The PSR is a single-source shortest path algorithm, which terminates when the destination is reached or when there is no feasible solution. The PSR starts at the current location of the vehicle and ends at the driver's designated destination. In many cases there are higher parking probabilities in side-streets close to the fastest route than on the main route. Hence, an algorithm only considering parking probabilities would lead the driver through side streets to the destination, where the driver decides where to park the car. Since it is not desirable to drive through such streets from the beginning of the route, parking probabilities are only taken into account within a circle with radius b around the destination, defining a predefined area.

The PSR operates on a street network modelled as a directed graph $G = (V, E)$, where $V$ denotes the set of nodes or vertices and $E \subseteq V \times V$ the set of arcs or directed edges. Nodes $v \in V$ represent crossings or dead ends and arcs $e \in E$ represent street segments. Since streets are directed, the arcs are directed as well and describe the driving direction on the streets. $c : E \to \mathbb{R}_0^+$ is a cost function that describes the costs for each edge $c(e_j)$. The A* algorithm computes a fastest route, so the cost on each edge is equal to the travel time $t(e_j)$ on the respective link. Only free flow speed and the link length are used to calculate the travel time. Nevertheless, traffic jams and current traffic information can easily be considered by replacing the free flow travel time with the current travel time. To apply the A* algorithm to the park spot routing problem, parking probabilities for each edge $p(e_j)$ have to be taken into account as well. Furthermore, to be able to address the user's needs, the expected walking distance from the parking spot to the destination has to be considered. The above described requirements are reflected in the cost function for the adapted A* algorithm. The resulting cost function is based on quality functions, which evaluate the resulting route.

The following cost function can be used:

$$C(e_{j+1}) = t(e_{j+1}) \tag{1}$$

$$\cdot \left(1 + \alpha \sqrt{-\frac{1}{b}\left(d(v_j, v_k) - b\right)} \tag{2} \right.$$

$$\left. \cdot \frac{\exp(s(1 - p(e_{j+1}))) - 1}{\exp(s) - 1}\right), \tag{3}$$

where $t(e_{j+1})$ is the travel time in seconds on road segment $e_{j+1}$, $b$ is the radius of the circle of the maximal distance in meters that the user is willing to walk from the parking spot to the destination (a constant), $d(v_j, v_k)$ the Euclidean distance in meters from the current node $v_j$ to the destination node $v_k$. For $d > b$, $\sqrt{-\frac{1}{b}\left(d(v_j, v_k) - b\right)}$ is assumed to be zero. At each node within the boundary b, the walking distance to the destination node is estimated. To estimate the distance of two nodes, the Euclidean distance is used. For two points $l$ and $m$ with Cartesian coordinates $l = (l_1, l_2)$ and $m = (m_1, m_2)$ it is defined as:

$$d(l, m) = d(m, l) = \sqrt{(m_1 - l_1)^2 + (m_2 - 2)^2}.$$

$p(e_{j+1})$ is the parking probability on edge $e_{j+1}$, s a parameter for the slope of the curve and $\alpha$ is a weight. In summary, the cost function includes or consists of (1) the travel time on the current edge, (2) the estimated walking distance from the current node to the destination node and (3) the parking probability on the current edge.

**C. A Stochastical Routing Algorithm**

In this section, the second algorithm used for the universal routing algorithm is introduced. It is called stochastic routing algorithm. It aims at maximizing the probability of arriving on time.

The previous section described a solution method for a deterministic or static shortest path problem. The key in the problem formulation is deterministic costs on the edges. However, the uncertainty in travel times due to traffic conditions cannot be described by a deterministic model, since realistic travel times of a road segment are stochastic variables. Therefore, the stochastic shortest path (SSP) problem is introduced, since it takes the uncertainty of traffic conditions into account.

In the SSP, the optimality criteria for a path are not unique, in contrast to the static problem. The most popular SSP problem is the probability tail model. It aims at maximizing the probability of punctuality. The punctuality problem can be formulated as an integer linear program (ILP), where the deadline $\tau$ is seen as a time budget that is user defined. This ILP can be solved with existing solvers, like CPLEX. The so called stochastic routing algorithm is based on stochastic travel time data. Hence, it is a data driven approach requiring travel time samples of the road links. The ILP for the stochastic routing algorithm reads as follows:

$$\min_{x} \quad \sum_{i=1}^{S} \theta_i \quad\quad\quad (4)$$

$$\text{s.t.} \quad w_i^{\mathsf{T}} x - \theta_i \cdot V \leq \tau, \ i = 1, 2 \dots, S \quad (5)$$

$$Mx = B \quad\quad\quad\quad\quad (6)$$
$$\theta \in \{0,1\}^S$$
$$x \in \{0,1\}^{|E|},$$

where $\Theta$ and $x$ are the decision variables. Additionally, $\tau$ describes the time budget, i.e. the time-to-deadline, $w_{ij}$ denotes the $i$-th travel time sample on edge $j$ and $S$ is the sample size of the historic travel time data. If $x_j = 1$, link $j$ is on the optimal path and if $x_j = 0$, link $j$ is not on the optimal path, where $j \in \{1,2, ... |E|\}$ represents the number of delays on the path for each set of travel time samples. If there is a delay, i.e. $w_i^{\mathsf{T}} x > \tau$, then $\Theta_i = 1$ in order to fulfil the first constraint (5). If there is no delay, i.e. $w_i^{\mathsf{T}} x \leq \tau$, then $\Theta_i = 1$ and $\Theta_i = 0$ are both valid for (5), however, $\Theta$ has to be zero for the optimal solution. $V$ is a big value, e.g. $10^{10}$ that keeps the constraint feasible. The second constraint (6) incorporates the incidence matrix $M$ of the network and the start and destination vector $B$, where $B(o) = 1$ and $B(d) = -1$ for the origin $o$ and destination $d$. All other entries are zeros. This constraint ensures that $x$ is a connected path from the origin $o$ to the destination $d$. In summary, the stochastic routing algorithm results in a route that maximizes the probability of arriving not later than the deadline $\tau$ by taking advantage of historic travel time samples of the road links.

## D. Universal Routing

After describing the park spot routing and stochastic routing algorithm, the approach to combine them is described in the following. The combination is called "universal" routing algorithm, since it can be applied to different urban scenarios. It does not only consider travel times on street links, but also parking probabilities and historic travel time data. However, it can also consider only current travel times and/or no parking probabilities, depending on the input for the algorithm. The aim of this combined algorithm is to optimize the way to find a free on-street parking spot and to arrive on time. Furthermore, the route can be personalized according to the user's preferences.

A possible use case for the universal routing algorithm is that the user has an appointment in the city and wants to drive there by car from a location outside of the city. They want to be on time for their appointment and find a parking spot close to their destination, while being navigated with their car's navigation system. The combination of the park spot routing algorithm and stochastic routing algorithm would lead the user through streets with high parking probabilities, while maximizing the probability of arriving on time.

### Quality Functions

To be able to evaluate the resulting route, quality functions that describe the characteristics of the route, have to be defined. The criteria of interest are cumulated parking probability $P$, expected walking distance $W$ and probability of arriving on time $AT$. The quality functions for the first two criteria are the same as the ones for the PSR. They are denoted $Q_{WD}$ for the expected walking distance and $Q_{CP}$ for the cumulated parking probability. Additionally, the probability of arriving on time $A$ is computed by comparing the total travel times of the resulting route for each travel time sample with the deadline. The amount of times that the total travel time of the path was smaller or equal to the deadline is then divided by the sample size. The quality function for the cumulated parking probability is used to derive the quality value for the probability of arriving on time: $Q_{AT}(A) = Q_{CP}(A)$. Eventually, the total quality value is computed by adding the three quality values for cumulated parking probability, expected walking distance and probability of arriving on time up and dividing the sum by three:

$$Q = \frac{Q_{WD}(W) + Q_{CP}(P) + Q_{AT}(A)}{3}.$$

According to the quality functions $Q_{CP}$ and $Q_{AT}$, probabilities from 95% to 100% are seen as acceptable.

A Universal Routing Algorithm

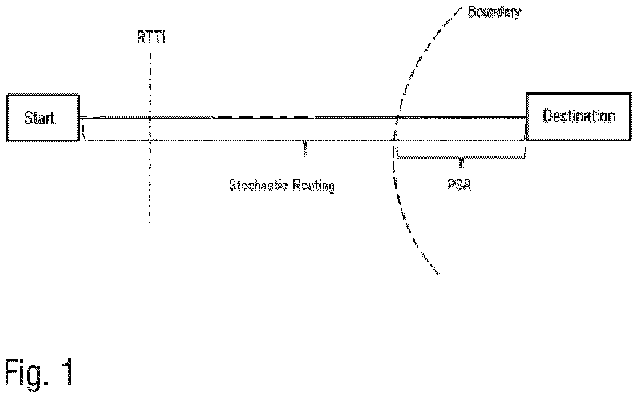

The approach to combine the different algorithms is to integrate the PSR into the ILP of the stochastic routing algorithm. Hence, the two algorithms simultaneously influence the computation of the route. The structure of the integrative or combined approach is illustrated in FIG. 1. For given start and destination points, the combination of edges that fulfil the constraints the best, are chosen. For the beginning of the route, real time traffic information (RTTI) can be used, if they are available. Consequently, there is no need to use the historic travel time data since more accurate information is available. The parking probabilities come into play when a certain boundary circle is reached; the stochastic information about travel times still remains active. The integrative approach of the universal routing algorithm involves the ILP of the stochastic routing algorithm (4) and the cost function of the PSR (2)-(3). Hence, the universal route is obtained by solving the following linear program:

$$\min_{x} \quad \sum_{i=1}^{S} \theta_i$$

$$\text{s.t.} \quad w_i^\top x - \theta_i \cdot V \leq \tau, \ i = 1, 2 \ldots, S, \ \text{if } d > b \quad (7)$$

$$w_i^\top \cdot \left( 1 + \alpha \sqrt{-\frac{1}{b}(d-b)} \right.$$

$$\left. \cdot \frac{\exp(s(1-p)) - 1}{\exp(s) - 1} \right) x - \theta_i \cdot V \leq \tau, \quad (8)$$

$$i = 1, 2 \ldots, S, \ \text{if } d < b$$

$$Mx = B$$

$$\theta \in \{0, 1\}^S$$

$$x \in \{0, 1\}^{|E|}$$

The variables and parameters for this ILP are described above. However, there is an additional term present in (8). It is a part of the cost function of the PRS introduced above. Constraints (7) and (8) describe the conditions that apply for inside and outside of the boundary circle. The term in parentheses in (8) becomes active when the boundary circle is reached, i.e. the distance of the nodes currently under exploration is lower than the boundary. Otherwise, only historic travel time data are considered in (7), which is equal to constraint (5) of the stochastic routing ILP.

The main difference to the cost function of the park spot routing algorithm is that historic travel times are considered instead of the free flow travel time on a road link. Thereby, it is guaranteed that the algorithm does not choose street segments where the parking probability is high, but a delay is likely. The interpretation of the parameters in parentheses in (8) is slightly different to those in (2)-(3). In the latter, the distance $d(v_j; v_k)$ and parking probability $p(e_j)$ described the attributes for a single node $v_j$ or road segment $e_j$ respectively. In the ILP in constraint (8) d contains all the Euclidean distances from every node in the graph to the destination node. Additionally, *p* contains the parking probabilities for every edge in the network. To connect the node-wise distance computation and the edge-wise parking probabilities, on the edge currently under exploration, the node of this edge that is closer to the destination is taken for the distance computation.

Simulation Results

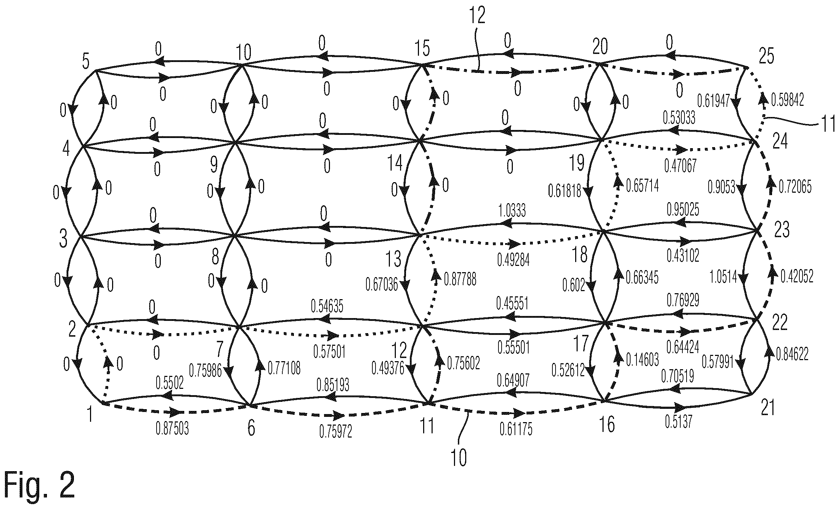

To verify the above described algorithm, simulations on an artificial grid were carried out. A grid with 25 nodes and 80 edges is used. There are parking probabilities and travel times associated with the edges. It is assumed that every edge has the same length of 50 m, however, the speed limits differ. They are randomly distributed over the grid with a normal distribution with a mean of 50 km/h and a variance of 10 km/h. The start is the left lower corner at node 1 and the destination the right upper corner at node 25 in FIG. 2. Furthermore, travel time samples with a sample size of $S = 100$ are created, i.e. for each edge 100 travel times are generated. Since no user data on the time budget $\tau$ is given, it is modelled by calculating alternative routes.

The simulation of $\tau$ can be summarized as follows: all possible paths in the network are enumerated and for each of the paths the longest travel times regarding the travel time samples are detected. Among the longest travel times, the minimum travel time is extracted, denoted $T_2$. For the same path, the shortest travel time is discovered and denoted $T_1$. Then the deadline is calculated as $\tau = T_1 + \gamma(T_2 - T_1)$, where $\gamma$ is the deadline coefficient with respect to $\tau$ and chosen as 0.9. The selection of $\tau$ is crucial for the algorithm to find a feasible solution. A deadline that is too tight to meet the constraints causes an infeasible solution.

For the simulation a boundary circle of $b = 150\ m$ is assumed. The weight has a considerable impact on the route choice of the PSR. Consequently, it influences the route choice of the universal routing algorithm as well. Therefore, the optimal value for $\alpha$ for the PSR according to the total quality value is computed first for the different probability distributions and then transferred to the universal routing algorithm. The different values for $\alpha$ can be found in Table I.

Table I: Simulation results for the different routes

| Probability distribution | Route | Parking prob. | Prob. of arriving on time | Total qlty. value |
|---|---|---|---|---|
| Normal 0.7 lower half $\alpha = 1$ | Fastest | 0 | 0.91 | 0.035133 |
| | Stochastic | 0.96304 | 0.97 | 0.62309 |
| | PSR | 0.93499 | 0.93 | 0.45689 |
| | Universal | 0.96304 | 0.97 | 0.62309 |
| Normal 0.7 upper half $\alpha = 1$ | Fastest | 0.9883 | 0.91 | 0.61729 |
| | Stochastic | 0 | 0.97 | 0.15746 |
| | PSR | 0.9883 | 0.91 | 0.61729 |
| | Universal | 0.9883 | 0.93 | 0.64009 |
| Normal 0.5 whole graph $\alpha = 111$ | Fastest | 0.847 | 0.91 | 0.37574 |
| | Stochastic | 0.90493 | 0.97 | 0.52174 |
| | PSR | 0.95998 | 0.93 | 0.51381 |
| | Universal | 0.95998 | 0.94 | 0.53026 |

Three different scenarios were chosen to verify the universal routing algorithm and solved with CPLEX. For each scenario the travel time samples, speed limits and lengths of the links remain the same to make the results comparable, only the parking probability distributions change. The results for the different scenarios are compared in Table I, furthermore, the legend for the different routes in FIGs. 2 to 4 is explained in Table II.

Table II: Different routes in the plot

| Number¤ | Route¤ | ¤ |
|---|---|---|
| ¶ | | |
| 12¶ | Fastest¶ | ¤ |
| 11¶ | Stochastic¶ | |
| 10¶ | PSR¶ | |
| 13¤ | Universal¤ | |

Every scenario is carried out with $\gamma = 0.9$. For scenario 1, parking probabilities are generated with the normal distribution and a mean of 0.7. Values greater than one are adjusted to be 1. The same holds for values smaller than zero, they are adjusted to be 0. The parking probabilities are only distributed in the lower triangle of the grid, the upper triangle has parking probabilities of 0, as illustrated in FIG. 2. Assume an imaginary line from node 1 to node 25. The upper triangle then covers the edges and nodes above this line (i.e. nodes 2-5, 8-10 etc.). The algorithms are run with the weight $\alpha = 1$. The fastest route 12 has a low-quality value of 0.04 due to the fact that it leads through streets without parking probabilities and that it has a relatively low probability of arriving on time of 91%, since probabilities greater than 95% are assumed to be acceptable.

In comparison, the stochastic route 11 has the highest probability of arriving on time with 97%, and a high cumulated parking probability, which results in a quality value of 0.62. The PSR 10 has a high cumulated parking probability, but a lower probability of arriving on time compared to the stochastic route. A quality value of 0.46 is the consequence. The same highest overall quality value as the stochastic route has the universal route 13 with 0.62. It has a high cumulated parking probability, while having a higher probability of arriving on time than the PSR. In summary, the universal route 13 adapts the behaviour of the stochastic route with high parking probability and high probability of arriving on time for scenario 1.

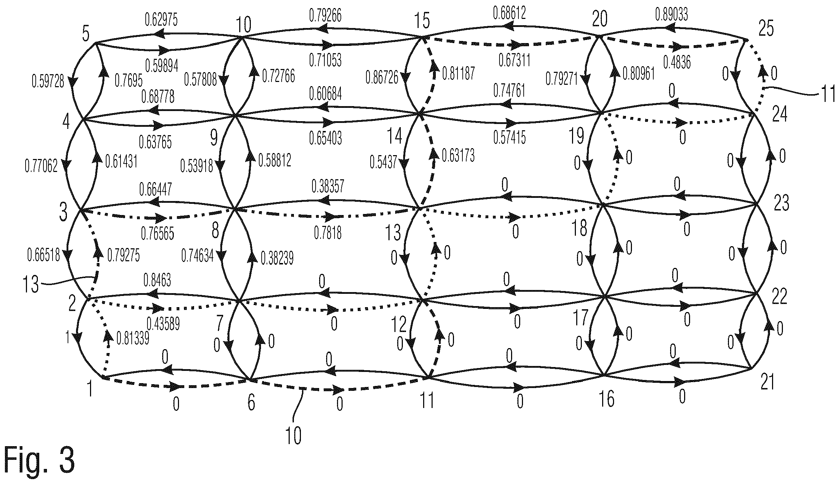

For the second scenario, the parking probabilities with a mean of 0.7 are distributed in the upper triangle of the artificial grid, the lower triangle has parking probabilities of 0. The algorithm is run with the weight $\alpha = 1$ and the resulting routes are displayed in FIG. 3. The fastest and PSR take the same path as the cumulated parking probabilities are already high on the fastest path, namely 98.8%. Hence, the PSR takes advantage of the high parking probabilities and low total travel time. Furthermore, they have a relatively low probability of arriving on time with 0.91. The stochastic route is not influenced by the change of the parking probabilities compared to scenario 1, consequently it remains the same. The universal route finds a trade-off between parking probabilities (98.8%) and probability of arriving on time (93%), which, results in the highest quality value of 0.64.

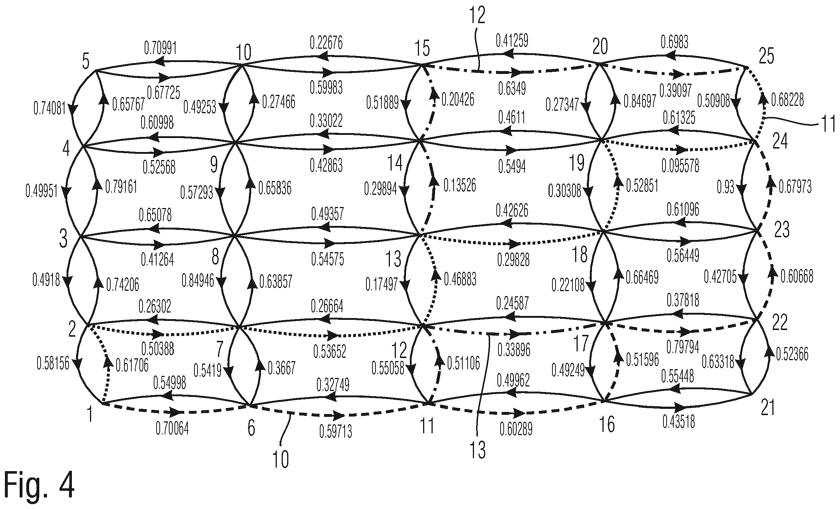

Scenario 3 in FIG. 4 is different from the other two scenarios, as the parking probabilities are modelled with a normal distribution with a mean of 0.5 and distributed over the whole grid. Additionally, the simulations are carried out with $\alpha = 111$. Again, the probability of arriving on time for the fastest and stochastic route does not change, only the cumulated parking probability changes. In this scenario, all three routes are different. The universal route can achieve the highest total quality value with 0.53 due to high parking probability of 0.96 and high probability of arriving on time (94%), where the fastest or PSR can only achieve lower quality values due to lower probability of arriving on time.

The above described scenarios aim at exploring and evaluating the behaviour of the universal routing algorithm. In summary, it can be observed that the universal routing algorithm finds a compromise between cumulated parking probability and probability of arriving on time. If the original stochastic or park spot route already have a good quality value, the universal route will imitate one of them instead of providing a different route with unnecessary detours.

Being stressed out by trying to find a free parking spot and to arrive on time are well-known feelings for a driver in an urban environment. Furthermore, random cruising for parking has a bad influence on air quality in a city. The present disclosure provides an approach to solve the aforementioned problems. The universal routing algorithm, which is a combination of the park spot routing and stochastic routing algorithm, improves the way to find a free parking spot while simultaneously maximizing the probability of arriving on time.

While the foregoing is directed to embodiments of the disclosure, other and further embodiments of the disclosure may be devised without departing from the basic scope thereof, and the scope thereof is determined by the claims that follow.

**Claims**

1. Computer-implemented method for time-dependent vehicle routing, comprising:

   determining a travel path from a start position to an end position based on a combination of:

i) a park spot routing algorithm being a shortest path algorithm that uses parking probabilities within a predefined area around the end position in its cost function; and

ii) a stochastic routing algorithm configured to maximize a probability of arriving before or at a predefined time at the end position and/or a parking spot within the predefined area, wherein the cost function of the park spot routing algorithm is integrated into a constraint of an integer linear program of the stochastic routing algorithm.

2. The method of claim 1, wherein the determining of the travel path further includes:
simultaneously maximizing a parking probability and the probability of arriving before or at the predefined time.

3. The method of claim 1 or 2, wherein the park spot routing algorithm is an adapted A* algorithm.

4. The method of any one of claims 1 to 3, wherein the integer linear program uses a user-defined time budget indicating the predefined time.

5. A machine readable medium comprising instructions executable by one or more processors to implement the method of any one of claims 1 to 4.

6. A system for time-dependent vehicle routing, comprising:

one or more processors; and
a memory coupled to the one or more processors and comprising instructions executable by the one or more processors to implement the method of any one of claims 1 to 4.

**Patentansprüche**

1. Computerimplementiertes Verfahren zum zeitabhängigen Leiten eines Fahrzeugs, Folgendes umfassend:
Bestimmen eines Fahrweges von einer Startposition zu einer Endposition, basierend auf einer Kombination aus Folgendem:

I) eines Parkplatzleitalgorithmus, der ein Algorithmus des kürzesten Weges ist, der Parkwahrscheinlichkeiten in einem vordefinierten Bereich rings um die Endposition in seiner Kostenfunktion verwendet, und
II) eines stochastischen Leitalgorithmus Leitens, der dafür gestaltet ist, eine Wahrscheinlichkeit der Ankunft vor oder zu einem vordefinierten Zeitpunkt an der Endposition und/oder einem Parkplatz in dem vordefinierten Bereich zu maximieren, wobei die Kostenfunktion des Parkplatzleitalgorithmus in eine Bedingung eines ganzzahligen linearen Programms des stochastischen Leitalgorithmus integriert ist.

2. Verfahren nach Anspruch 1, wobei das Bestimmen des Fahrweges ferner Folgendes beinhaltet:
gleichzeitiges Maximieren einer Parkwahrscheinlichkeit und der Wahrscheinlichkeit der Ankunft vor oder zum vordefinierten Zeitpunkt.

3. Verfahren nach Anspruch 1 oder 2, wobei der Parkplatzleitalgorithmus ein angepasster A*-Algorithmus ist.

4. Verfahren nach einem der Ansprüche 1 bis 3, wobei das ganzzahlige lineare Programm ein benutzerdefiniertes Zeitkontingent verwendet, das den vordefinierten Zeitpunkt angibt.

5. Maschinenlesbares Medium, das Befehle umfasst, die von einem oder mehreren Prozessoren ausführbar sind, um das Verfahren nach einem der Ansprüche 1 bis 4 zu implementieren.

6. System zum zeitabhängigen Leiten eines Fahrzeugs, Folgendes umfassend:

einen oder mehrere Prozessoren und
einen Speicher, der mit dem einen oder den mehreren Prozessoren gekoppelt ist und Anweisungen umfasst, die durch den einen oder die mehreren Prozessoren ausführbar sind, um das Verfahren nach einem der Ansprüche 1 bis 4 zu implementieren.

**Revendications**

**1.** Procédé mis en œuvre par ordinateur destiné à un routage de véhicule dépendant du temps, comprenant :
la détermination d'un trajet de déplacement d'une position de début à une position de fin sur la base d'une combinaison de :

i) un algorithme de routage de point de stationnement qui est un algorithme de trajet le plus court qui utilise des probabilités de stationnement dans une zone prédéfinie autour de la position de fin dans sa fonction de coût ; et
ii) un algorithme de routage stochastique configuré pour maximiser une probabilité d'arrivée avant ou à un moment prédéfini à la position de fin et/ou un point de stationnement dans la zone prédéfinie, dans lequel la fonction de coût de l'algorithme de routage de point de stationnement est intégrée dans une contrainte d'un programme linéaire en nombre entier de l'algorithme de routage stochastique.

**2.** Procédé selon la revendication 1, dans lequel la détermination du trajet de déplacement comprend en outre :
la maximisation de manière simultanée d'une probabilité de stationnement et de la probabilité d'arrivée avant ou au moment prédéfini.

**3.** Procédé selon la revendication 1 ou 2, dans lequel l'algorithme de routage de point de stationnement est un algorithme A* adapté.

**4.** Procédé selon l'une quelconque des revendications 1 à 3, dans lequel le programme linéaire en nombre entier utilise un budget temporel défini par l'utilisateur indiquant le temps prédéfini.

**5.** Support lisible par machine comprenant des instructions exécutables par un ou plusieurs processeurs pour mettre en œuvre le procédé selon l'une quelconque des revendications 1 à 4.

**6.** Système destiné à un routage de véhicule dépendant du temps, comprenant :

un ou plusieurs processeurs ; et
une mémoire couplée à l'un ou aux plusieurs processeurs et comprenant des instructions exécutables par le ou les plusieurs processeurs pour mettre en œuvre le procédé selon l'une quelconque des revendications 1 à 4.

Fig. 1

Fig. 2

Fig. 3

Fig. 4

EP 3 779 363 B1

**EP 3 779 363 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040167712 A1
- US 2018274930 A1
- US 2014214319 A1
- US 9291469 B2